# EUROPEAN PATENT SPECIFICATION

(11) **EP 0 939 218 B1**
(45) Date of publication and mention of the grant of the patent: **02.04.2003**
(21) Application number: 98118318.9
(22) Date of filing: 28.09.1998
(51) Int. Cl.: F02M 37/10

(54) **Fuel supply apparatus**
Brennstoffzufuhrvorrichtung
Dispositif d'alimentation en carburant

(30) Priority: 25.02.1998 JP 4306598
(43) Date of publication of application: 01.09.1999
(73) Proprietor: MITSUBISHI DENKI KABUSHIKI KAISHA, Tokyo 100-8310 (JP)
(72) Inventor: Iwai, Shingo, Chiyoda-ku, Tokyo 100-8310 (JP); Tsutsui, Seiji, Chiyoda-ku, Tokyo 100-8310 (JP)
(74) Representative: HOFFMANN - EITLE

(56) References cited:
- EP-A- 0 754 483
- EP-A- 0 771 946
- EP-A- 0 856 658
- EP-A- 0 903 255
- DE-A- 4 242 242
- DE-A- 19 727 470
- US-A- 5 195 494
- PATENT ABSTRACTS OF JAPAN vol. 1996, no. 8, 30 August 1996 (1996-08-30) & JP 08 100727 A (TOYOTA16.04.96)

## Description

### BACKGROUND OF THE INVENTION

This invention relates to a fuel supply apparatus in which the fuel pump and the fuel filter disposed within a fuel tank of a vehicle or the like are arranged in an integral structure.

US-A-5 195 494 discloses a fuel supply apparatus having the features which are recited in the preamble of independent claim 1. The fuel supply apparatus employs a fuel pump having a pump outlet end cap which provides two flow paths or outlets. The first flow path contains a hose connecting a fitting at the pump outlet end cap of the fuel pump to the inlet of the fuel filter assembly. The second outlet of flow path contains, in this order, the pump outlet end cap, a hose, a flow inlet (inlet fitting) of a pressure regulator, an open neck of the pressure regulator, a hose, and a port on an outlet manifold which includes a fuel passage in which a check valve is provided. The pressure regulator opens when the fuel pressure at the check valve increases. The increased pressure is supplied through the hose to the pressure regulator. When the pressure regulator opens, it discharges fuel supplied from the pump through an outlet. Therefore, when the pressure regulator opens due to an increased pressure in the fuel passage of the outlet manifold, a part of the fuel which is discharged from the fuel pump is discharged through the opening of the pressure regulator, which results in turn that less pressurized fuel is supplied from the fuel pump through the hose to the fuel passage. A housing of a filter element, that is a first canister, is formed separate from a second canister which houses the entire fuel supply apparatus.

EP-A-0 903 255 discloses a fuel supply apparatus comprising an upper housing of a fuel filter constructed as a separate member from a bracket for mounting to a fuel tank, such that it does not constitute a structure for supporting the weight of the fuel supply apparatus.

EP-A-0 771 946 discloses a fuel supply apparatus comprising a fuel pump, a filter, a pressure regulator, and a check valve downstream of the pressure regulator. The fuel is supplied by an inlet line to an injection rail of an engine. The pressure regulator opens, when a certain pressure is exceeded, and discharges fuel through a return line to a fuel tank. Features relating to mounting the fuel supply apparatus to the fuel tank are not disclosed in this document.

DE-A-197 27 470 discloses a fuel supply apparatus including a fuel pump, a pressure regulator, and a filter. The fuel pump is built into the filter housing which is inserted into a housing the upper end of which is closed by a mounting plate.

JP-A-8 100 727 discloses a fuel supply apparatus immersed in a tank, and comprising a pump, a fuel filter, a supply passage, a pressure regulator, and a check valve for preventing fuel supplied to a delivery pipe of an engine part from flowing back to the tank. Measures for mounting the fuel supply device to the tank are not disclosed in this document.

DE-A-42 42 242 discloses a fuel supply apparatus comprising a fuel pump, a fuel filter housing containing therein a filter element, a supply passage for introducing filter fuel from the filter to an engine, and a check valve in the supply passage, the fuel filter housing being made of plastics. A support means having vibration damping means fixed therein serves for mounting the fuel supply apparatus on a wall of a fuel tank.

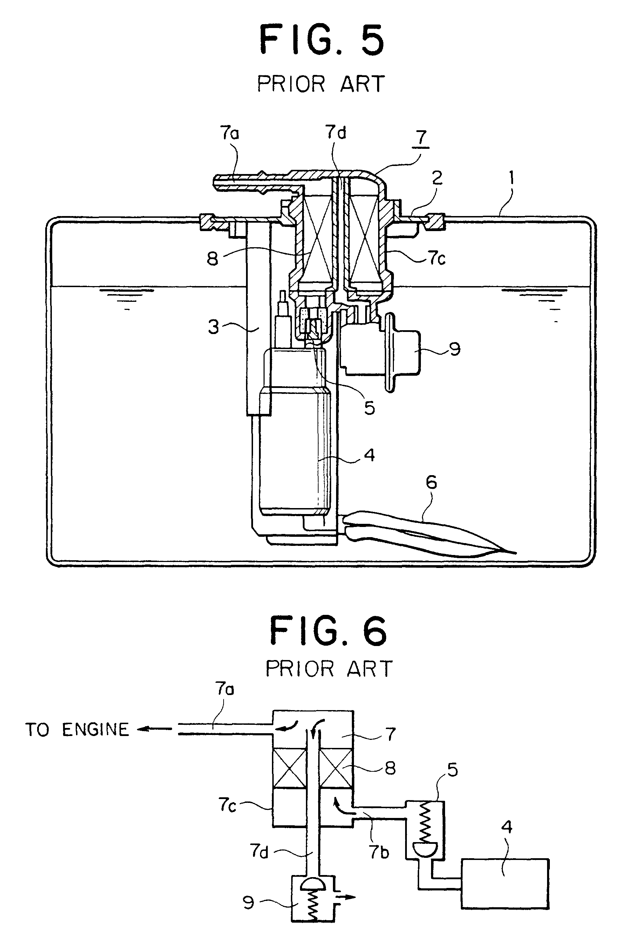

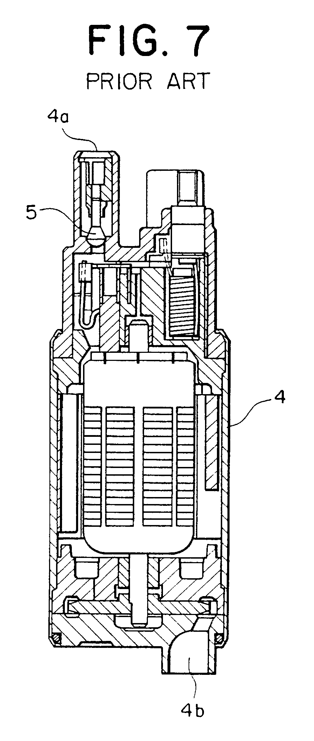

Fig. 5 is a sectional side view of a conventional fuel supply apparatus in which a fuel pump and a fuel filter are arranged in an integral structure shown in Japanese Patent Laid-Open No. 8-121282, for example, Fig. 6 is a schematic diagram of a fuel supply system and Fig. 7 is a sectional view of a conventional fuel pump disclosed in Japanese Patent Laid-Open No. 63-272994.

In the figures, 1 is a fuel tank having an opening at its top surface. 2 is a bracket oil-tightly mounted to the top opening of the fuel tank 1, 3 is a support post extending from the bracket 2 toward the bottom surface of the fuel tank 1, 4 is an electric type fuel pump held on the support post 3, 5 is a check valve disposed in the discharge port 4a of the fuel pump 4 and 6 is a filter mounted to the suction port 4b of the fuel pump 4.

Reference numeral 7 is a fuel filter having a supply port 7a to an engine mounted oil-tightly to the bracket 2 is positioned outside of the fuel tank 1 and a suction port 7b of the fuel filter 7 is connected to the discharge port 4a of the fuel pump 4. The housing 7c of the fuel filter 7 is made of a molded resin and having a filter element 8 therein. 9 is a pressure regulator which opens the valve when the fuel supply pressure to the engine through a communication passage 7d exceeds a predetermined value to return an excess amount of fuel to the fuel tank 1 to maintain the fuel supply pressure at a constant range.

Then, the operation of the conventional vehicular fuel supply apparatus will be described. When the key switch of the vehicle is turned on for starting the engine, the fuel pump 4 is driven to pressurize the fuel to 200 - 300 KPa (Kilo-Pascals) and pumped through the check valve 5 from the fuel supply port 7a to the engine. The pressure of the fuel supplied to the engine by the pressure regulator 9 connected to the downstream of the filter element 8 within the fuel filter 7 through the communication passage 7c is maintained at a constant range. When the fuel pump 4 is stopped by turning off the switch key, the check valve 5 prevents the reverse flow of the fuel from the fuel filter 7 to the fuel pump 4 thereby maintaining the fuel pressure in the fuel filter 7 and the supply port 7a.

In the conventional fuel supplying apparatus of the conventional design, the check valve 5 is disposed upstream of the fuel filter 7, so that even when the vehicle switch key is turned off to stop the engine, the fuel within the fuel filter 7 is maintained at a high pressure, so that the housing 7c of the fuel filter 7 is always subjected to a stress due to the high pressure fuel. Therefore, the configuration and the resin material must be selected so that the housing endures the constant stress during an extended period of operating life time of the vehicle, resulting in a high cost.

### SUMMARY OF THE INVENTION

Accordingly, an object of the present invention is to provide a fuel supply apparatus free from the above-discussed problems of the conventional apparatus. The invention provides a fuel supply apparatus having the features which are indicated in claim 1. Preferred embodiments of the invention are indicated in the dependent claims.

An advantage of the present invention is to provide a fuel supply apparatus in which, in view of the fact that the time in which the fuel is pumped for driving engine (driving the vehicle) is a few tenths of the vehicle operating life time, the stress of the high pressure fuel applied to the housing 7c is limited to only during the engine operation, whereby the selection of the configuration and the resin material for the housing 7c is made easy so that the fuel supply apparatus can be made inexpensive.

### BRIEF DESCRIPTION OF THE DRAWINGS

The present invention will become more readily apparent from the following detailed description of the preferred embodiments taken in conjunction with the accompanying drawings, in which:
Fig. 1 is a sectional side view of the fuel supply apparatus of the first embodiment of the present invention;
Fig. 2 is a schematic diagram of the fuel supply system of the first embodiment;
Fig. 3 is a sectional side view of the fuel supply apparatus of the second embodiment of the present invention;
Fig. 4 is a schematic diagram of the fuel supply system of the second embodiment;
Fig. 5 is a sectional side view of a conventional fuel supply apparatus;
Fig. 6 is a schematic diagram of a fuel supply system of the conventional fuel supply apparatus; and
Fig. 7 is a sectional view of a conventional fuel pump.

### DETAILED DESCRIPTIN OF THE PREFERRED EMBODIMENTS

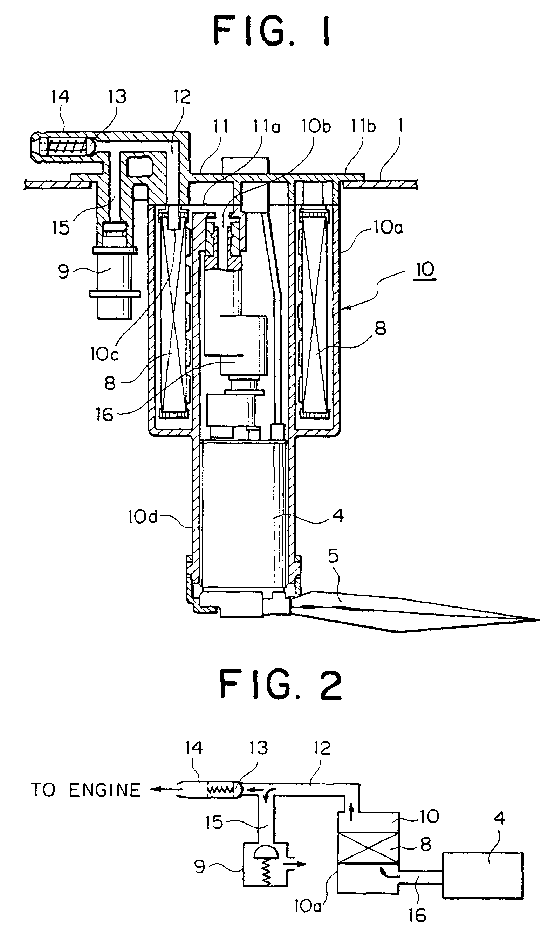

Fig. 1 is a sectional side view of the fuel supply apparatus of the first embodiment of the present invention and Fig. 2 is a schematic diagram of the fuel supply system of the first embodiment.

In these figures, reference numerals 1, 4, 8 and 9 designate the coimponents similar to those of the conventional apparatus as above described. Reference numeral 10 is a fuel filter having disposed within a main housing 10a made of a molded resin material of a polymer material a filter element 8 and an inlet 10b and outlet 10c for the fuel filter 10 are provided. Also, a pump holding portion 10d is provided at a downwardly extended portion of a main housing 10a. Reference numeral 11 is an upper housing of the fuel filter 10 made of a molded resin material, which, after the filter element 8 is inserted into the main housing 10a, the predetermined portions of the abutting portion 11a of the main housing 10a and the upper housing 11 are oil-tightly sealed by the thermal welding or the like so that the fuel flows within the fuel filter 10 from inlet 10b → the filter element 8 → the outlet 10c. At the same time, the outer edge of the upper housing 11 is provided with an integral bracket flange 11 b for mounting the fuel supply apparatus to the fuel tank 1.

Reference numeral 12 is a supply path communicating with the outlet 10c of the fuel filter 10 for supplying liquid fuel to the engine. This supply path 12 is also integrally formed in the upper housing 11. Reference numeral 13 is a check valve disposed to the nipple portion 14 at the terminal end of the supply path 12 for preventing the reverse flow of the liquid fuel from the engine to the fuel filter 10.

The supply path 12 and the outlet 10c are concurrently weld-connected when the upper housing 11 is heat welded in an oil-tight manner to the opening of the main housing 10a. Reference numeral 15 is a communication passage shunted from the supply path 12, its tip having mounted thereon the pressure regulator 9 and arranged so that the excess amount fuel from the pressure regulator 9 is returned to the fuel tank. Reference numeral 16 is a communication pipe connecting the fuel pump 4 and the inlet 10b of the fuel filter 10.

In the fuel supply apparatus arranged as described above, when the key switch of the vehicle is turned on to drive the fuel pump 4, the fuel pressurized to 200 - 300 KPa (Kilo-Pascals) is pumped from the inlet 10b of the fuel filter 10 to the outlet 10c through the filter element 8. During this process, the filter element 8 filters the dust or any foreign matters entrained in the fuel. The filtered liquid fuel is supplied to the engine through the supply path 12 and through the check valve 13. The pressure regulator 9, which is disposed to the communication passage 15 shunted from the supply path 12 for maintaining the fuel pressure in the engine within a constant range, discharges an excess amount of fuel in the supply path 12 to the fuel tank 1 upon an excessive pressure supply from the fuel pump 4 and the pressure increase due to decrease in the fuel consumption of the engine. When the key switch is turned off and the fuel pump 4 is stopped, the check valve 13 maintains the fuel pressure in the engine portion. However, since the pressurized liquid fuel in the fuel filter 10 is drained through from the fuel pump 4 due to the stoppage of the fuel pump 4, the inside of the fuel filter 10 is depressurized to a normal pressure, whereby the main housing 10a is relieved from the stress due to the pressurized liquid fuel when the vehicle is not being operated.

Therefore, when the engine is not operated, the stress of the high pressure liquid fuel acting on the main housing 10a can be eliminated. As compared to the life span of a vehicle, the operating time (the period during which the engine is driven) is only a few tenths, enabling the endurance period of the main housing 10a to be elongated as compared to the case where the stress of the high pressure liquid fuel is always applied. Particularly, when the resin molding configuration is such that the pump holding portion 10d is integrally formed to the main housing 10a, the flow of the resin during molding is complex and a local weak portion is generated in the main housing 10a, the configuration and the resin material can be easily selected to provide an inexpensive fuel supply apparatus.

Also, the arrangement in which the check valve 13 is disposed in the nipple portion 14 at the terminal end of the supply path 12 makes the provision of the check valve 13 easy.

Since the liquid fuel that becomes an excess amount because of the pressure adjustment of the supply path 12 by the pressure regulator 9 integrally connected to the supply path 12 is directly returned to the fuel tank 1, piping for the return pipe is not necessary, making the apparatus simple.

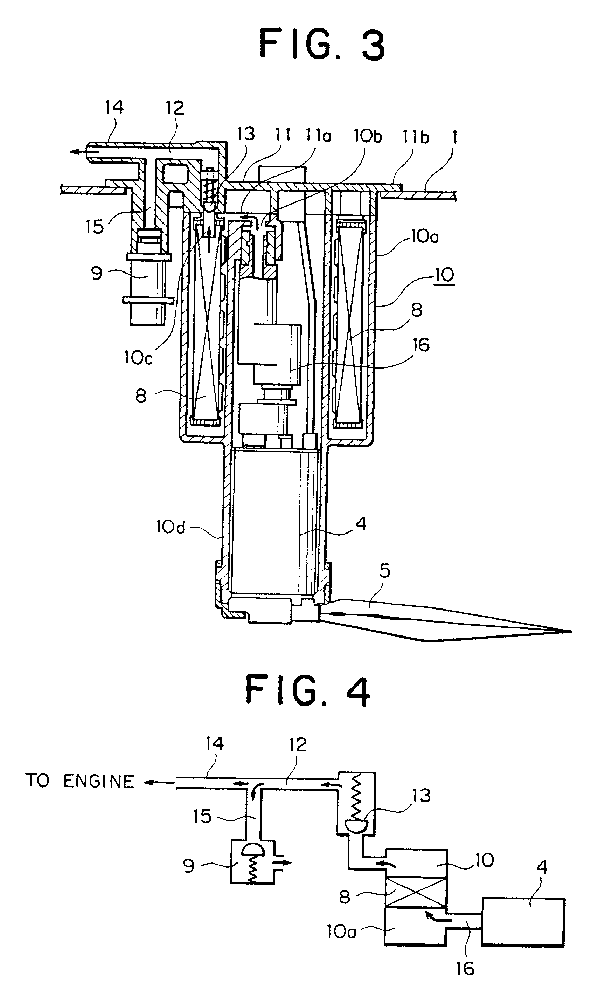

Fig. 3 is a sectional side view of the fuel supply apparatus of the second embodiment of the present invention and Fig. 4 is a schematic diagram of the fuel supply system of the second embodiment. In the figures, 1, 4, 8, 9 - 16 are those similar to the components explained in connection with the first embodiment.

The fuel supply apparatus of the second embodiment is provided with the check valve 13 disposed between the outlet 10c of the fuel filter 10 of the supply path 12 and the shunt of the connection passage 15 of the pressure regulator 9, the valve member of the check valve 13 being disposed in vertical position.

By positioning the check valve 13 in this position, the excessive liquid fuel on the engine side can be relieved without fail by the pressure regulator 9. Also, the operational instability of the check valve 13 due to the influence of the pipe connection between the engine and the supply path 12 can be eliminated.

## Claims

1. A fuel supply apparatus to be immersed in fuel within a fuel tank (1), comprising:
a fuel pump (4) for pumping fuel;
a fuel filter housing (10a, 11) containing therein a filter element (8) of a fuel filter (10) for filtering said fuel from said fuel pump (4) ;
a supply passage (12) for introducing the filtered fuel from said fuel filter (10) to an engine;
a pressure regulator (9) for opening a valve when the fuel pressure within said supply passage is equal to or more than a predetermined pressure for regulating the fuel pressure within said supply passage (12); and
a check valve (13) incorporated in said supply passage (12) for preventing a reverse flow of the fuel from the engine;
**characterized in that**
said pressure regulator (9) returns an excess amount of the fuel in said supply passage (12) to said fuel tank (1);
said fuel filter housing (10a, 11) is made of a molded polymer material;
said fuel filter housing is composed of a main housing (10a) surrounding and holding said filter element (8) and an upper housing (11) made of a molded polymer material joined to define an oil-tight fuel filter (10); and
the outer edge of said upper housing (11) is provided with an integral bracket flange (11b) for mounting the fuel supply apparatus to said fuel tank (1).

2. A fuel supply apparatus as claimed in claim 1, wherein said check valve (13) is disposed in a nipple portion (14) at an end of the supply passage (12) downstream of a branching point to said pressure regulator (9).

3. A fuel supply apparatus as claimed in claim 1, wherein said check valve (13) is disposed between said fuel filter (10) and a branching point to said pressure regulator (9).

4. A fuel supply apparatus as claimed in any one of claims 1 to 3, wherein said main housing (10a) integrally defines a fuel pump holding portion (10d), and said pressure regulator (9) is connected and mounted to said supply passage (12) disposed in said upper housing (11).

## Patentansprüche

1. Kraftstoffzuführvorrichtung, welche innerhalb eines Kraftstofftanks (1) in Kraftstoff unterzutauchen ist, und welche aufweist:
eine Kraftstoffpumpe (4) zum Pumpen des Kraftstoffs;
ein Kraftstofffiltergehäuse (10a, 11), welches darin ein Filterelement (8) eines Kraftstofffilters (10) zum Filtern des Kraftstoffs von der Kraftstoffpumpe (4) umfasst;
eine Zuführpassage (12) zur Einführung des gefilterten Kraftstoffs von dem Kraftstofffilter (10) zu einem Motor;
ein Druckregulator (9) zum Öffnen eines Ventils, wenn der Kraftstoffdruck innerhalb der Zuführpassage gleich oder größer als ein vorbestimmter Kraftstoffdruck zur Regulierung des Kraftstoffdrucks innerhalb der Zuführpassage (12) ist; und
ein Absperrventil (13), welches in der Zuführpassage (12) eingebracht ist, um einen Rückfluss des Kraftstoffs von dem Motor zu vermeiden;
**dadurch gekennzeichnet, dass**
der Druckregulator (9) einen überschüssigen Betrag des Kraftstoffs in der Zuführpassage (12) zu dem Kraftstofftank (1) zurückführt;
das Kraftstofffiltergehäuse (10a, 11) aus einem geformten Polymermaterial hergestellt ist;
das Kraftstofffiltergehäuse aus einem Hauptgehäuse (19a), welches das Filterelement (8) umgibt und hält, und einem oberen Gehäuse (11) aufgebaut ist, welches aus einem geformten Polymermaterial hergestellt ist, welche verbunden sind, um einen öldichten Kraftstofffilter (10) zu definieren; und
die äußere Kante des oberen Gehäuses (11) mit einem integrierten Halterflansch (11b) versehen ist, um die Kraftstoffzuführvorrichtung an dem Kraftstofftank (1) anzubringen.

2. Kraftstoffzuführvorrichtung nach Anspruch 1, wobei das Absperrventil (13) in einem Stutzenabschnitt (14) an einem Ende der Zuführpassage (12) stromabwärts des Abzweigpunkts zu dem Druckregulator (9) angeordnet ist.

3. Kraftstoffzuführvorrichtung nach Anspruch 1, wobei das Absperrventil (13) zwischen dem Kraftstofffilter (10) und einem Abzweigpunkt zu dem Druckregulator (9) angeordnet ist.

4. Kraftstoffzuführvorrichtung nach einem der vorhergehenden Ansprüche 1 bis 3, wobei das Hauptgehäuse (10a) integriert einen Kraftstoffpumpenhalterabschnitt (10d) definiert, und wobei der Druckregulator (9) mit der Zuführpassage (12) verbunden und an dieser angebracht ist, welche in dem oberen Gehäuse (11) angeordnet ist.

## Revendications

1. Dispositif d'alimentation en carburant à immerger dans le carburant dans un réservoir de carburant (1), comprenant :
une pompe de carburant (4) pour pomper le carburant ;
un boîtier de filtre de carburant (10a, 11) contenant à l'intérieur un élément filtrant (8) d'un filtre de carburant (10) pour filtrer ledit carburant de ladite pompe de carburant (4) ;
un passage d'amenée (12) pour introduire le carburant filtré dudit filtre de carburant (10) dans un moteur ;
un régulateur de pression (9) pour ouvrir une vanne lorsque la pression du carburant dans ledit passage d'amenée est égale ou supérieure à une pression prédéterminée pour régler la pression du carburant dans ledit passage d'amenée (12) ; et
une vanne d'arrêt (13) incorporée dans ledit passage d'amenée (12) pour empêcher un reflux du carburant du moteur ;
**caractérisé en ce que**
ledit régulateur de pression (9) ramène une quantité excédentaire de carburant dans ledit passage d'amenée (12) audit réservoir de carburant (1) ;
ledit boîtier de filtre de carburant (10a, 11) est réalisé en un matériau de polymère moulé ;
ledit boîtier de filtre de carburant est constitué d'un boîtier principal (10a) entourant et retenant ledit élément filtrant (8) et un boîtier supérieur (11) réalisé en un matériau de polymère moulé qui est joint pour définir un filtre de carburant étanche à l'huile (10) ; et
le bord extérieur dudit boîtier supérieur (11) présente une bride de support intégrale (11b) pour monter le dispositif d'alimentation en carburant sur ledit réservoir de carburant (1).

2. Dispositif d'alimentation en carburant selon la revendication 1, où ladite vanne d'arrêt (13) est disposée dans une portion de raccord (14) à une extrémité du passage d'amenée (12) en aval d'un point de branchement vers ledit régulateur de pression (9).

3. Dispositif d'alimentation en carburant selon la revendication 1, où ladite vanne d'arrêt (13) est disposée entre ledit filtre de carburant (10) et un point de branchement vers ledit régulateur de pression (9).

4. Dispositif d'alimentation en carburant selon l'une des revendications 1 à 3, où ledit boîtier principal (10a) définit intégralement une portion de retenue de pompe de carburant (10d), et ledit régulateur de pression (9) est connecté à et monté sur ledit passage d'amenée (12) disposé dans ledit boîtier supérieur (11).
